# FASCICULE DE BREVET EUROPEEN

(11) **EP 3 362 305 B1**
(45) Date de publication et mention de la délivrance du brevet: **04.12.2019**
(21) Numéro de dépôt: 16793955.2
(22) Date de dépôt: 10.10.2016
(51) Int. Cl.: B60G 7/00

(54) **BRAS DE SUSPENSION PRESENTANT DES EPAISSEURS DIFFERENTES**
AUFHÄNGUNGSARM MIT UNTERSCHIEDLICHEN DICKEN
SUSPENSION ARM HAVING DIFFERENT THICKNESSES

(30) Priorité: 16.10.2015 FR 1559841
(43) Date de publication de la demande: 22.08.2018
(73) Titulaire: RENAULT s.a.s., 92100 Boulogne-Billancourt (FR)
(72) Inventeur: SARAHOUI, Aziz, 72190 Coulaines (FR); GALLO, Emmanuel, 72000 Le Mans (FR)
(86) Numéro de dépôt international: PCT/FR2016/052612
(87) Numéro de publication internationale: WO 2017/064404

(56) Documents cités:
- WO-A1-02/070290
- WO-A1-2010/066226
- WO-A1-2015/086962
- WO-A2-2006/131683
- CN-U- 204 659 379
- DE-A1- 10 024 225
- DE-A1-102007 049 113
- JP-A- H08 332 820
- KR-A- 20100 103 137
- US-A1- 2011 127 743
- US-A1- 2015 258 869

## Description

La présente invention concerne un bras de suspension de véhicule automobile, notamment une voiture. Plus particulièrement, la présente invention concerne un bras de suspension formé d'une plaque de tôle d'épaisseur variable.

Les bras de suspension utilisés dans les véhicules automobiles sont des dispositifs destinés à relier les roues au châssis du véhicule. Notamment le bras de suspension est relié d'un côté au moyeu portant la roue et de l'autre à un élément du châssis, notamment un élément appelé berceau, lui-même relié à la caisse. Ils sont la plupart du temps formés d'au moins une plaque métallique, notamment une plaque métallique emboutie.

Les chocs longitudinaux ou transversaux sur les roues sollicitent fortement les bras de suspension, qui doivent donc avoir une certaine résistance.

Egalement, en cas de choc à des vitesses faibles de circulation, par exemple 20 à 30 km/h, les bras de suspension risquent de se déformer, sans que cela soit visible pour le simple utilisateur du véhicule. Le risque est que cet utilisateur continue à rouler, sans s'être aperçu de cette déformation. Pourtant, cette déformation risque d'affecter la conduite. Cela entraine également un risque de rupture du bras de suspension.

Il est possible de fixer des pièces de renfort sur la plaque de tôle formant le bras de suspension, mais cela entraine un surcoût de matière et de poids. De plus, il faut éviter de trop renforcer le bras de suspension, pour que ce soit lui qui se déforme plutôt que le châssis du véhicule, en particulier le berceau.

Le document DE 10 2007 049113 A1 divulgue un bras de suspension de véhicule comprenant une structure de base formée à partir d'une plaque de métal, ladite structure de base comprenant une première portion destinée à être fixée à une roue d'un véhicule, et une deuxième portion destinée à être fixée au châssis du véhicule.

Le problème technique que vise à résoudre l'invention est donc de trouver un bras de suspension qui, en cas de choc sur la roue susceptible d'entrainer une déformation de la tôle du châssis, se déforme, tout en permettant à l'utilisateur d'avoir connaissance de cette déformation.

A cet effet, un premier objet de l'invention est un bras de suspension de véhicule comprenant une structure de base formée à partir d'une plaque de métal, ladite structure de base comprenant :
- une première portion destinée à être fixée à une roue d'un véhicule,
- une deuxième portion destinée à être fixée au châssis du véhicule.

L'épaisseur de la plaque de métal dans ladite première portion est supérieure à l'épaisseur de la plaque de métal dans ladite deuxième portion.

Ainsi, on crée un endroit privilégié de déformation entre la première portion et la deuxième portion. En cas de choc, c'est donc à cet endroit-là que le bras de suspension se déformera. Il est ainsi possible d'agencer dans la première et la deuxième portion des éléments plus fragiles, qui sont ainsi protégés car écartés de la zone privilégiée de déformation.

De plus la déformation étant concentrée sur un endroit, celle-ci pourra être remarquée par l'orientation qu'aura la roue après un choc déformant le bras de suspension, sans entraîner immédiatement sa rupture.

Ce résultat est obtenu sans ajout de pièce de renfort, donc sans surcoût de matière ou augmentation de poids.

L'invention peut optionnellement présenter une ou plusieurs des caractéristiques suivantes :
- la première portion est agencée de manière à être apte à recevoir au moins un moyen de liaison à une roue, et la deuxième portion est agencée de manière à être apte à recevoir des moyens de liaison au châssis distincts; ces moyens de liaison peuvent être fragiles et, en étant agencée pour les recevoir dans les première et deuxième portions, cette réalisation de l'invention permet de protéger ces moyens de liaison ;
- la première portion est agencée de manière à être apte à recevoir un moyen de liaison à une roue, et la deuxième portion est agencée de manière à être apte à recevoir deux moyens de liaison au châssis distincts; on peut ainsi avoir une fixation, dite en trois points, du bras de suspension, cette fixation étant assez stable ;
- la structure de base comprend une première branche avec :
   o une extrémité apte à recevoir au moins un moyen de liaison à une roue, l'extrémité étant agencée dans la première portion et
   o une base agencée dans la deuxième portion ;
cela permet ainsi de créer plus facilement une zone de déformation ou de pli en travers d'une branche, améliorant ainsi la perception de l'orientation de la roue après un choc par rapport à son orientation normale ; en particulier, le bras de liaison peut être agencé de manière à ce que lorsqu'il est monté sur le véhicule, la dimension verticale de cette branche soit plus petite que sa longueur et que sa largeur, ce qui permet un pli horizontal du bras et donc une déviation verticale de la roue après un choc, rendant cette déformation plus facilement détectable ;
- la deuxième portion comprend une deuxième branche et une troisième branche, la deuxième branche étant apte à recevoir un premier des moyens de liaison au châssis, et la troisième branche étant apte à recevoir un deuxième des moyens de liaison au châssis ; l'invention est ainsi adaptée aux bras de suspension dits « en triangle » ;
- le bras de suspension comprend le au moins un moyen de liaison à une roue et les moyens de liaison au châssis ; le bras de suspension est ainsi prêt à être relié directement au moyeu de la roue et au châssis du véhicule ;
- le moyen de liaison à une roue est une liaison rotule ; cela évite qu'en cas de choc la déformation entraine un déboitement de la liaison rotule ; on protège donc un moyen de liaison avantageux, car formant une articulation avec de nombreux degrés de liberté de mouvement, plus adaptée pour être reliée à un moyeu de roue.
- la liaison rotule comprend un siège comprenant un logement, à l'intérieur duquel est agencée une pièce mâle de manière à ce que, dans ce logement, cette pièce mâle soit bloquée en translation mais libre en rotation, le siège étant fixé à la première portion par des moyens de fixation, notamment des vis et des écrous ; ainsi la solidarisation de la liaison rotule est davantage protégée ; on évite en effet qu'un effort sur les fixations de la liaison rotule se transmette à cette dernière et entraine la sortie de la pièce mâle de son logement ;
- chaque moyen de liaison au châssis est une articulation permettant un mouvement de rotation autour d'un axe de rotation, les axes de rotation de chacun de ces moyens de liaison au châssis ayant des orientations différentes, notamment ces axes de rotation sont perpendiculaires ;
- les moyens de liaison au châssis sont formés par deux tubes concentriques entre lesquels est emmanchée à force une bague d'élastomère ; notamment ces moyens de liaison sont commercialisés sous la marque Silentbloc® ; ces moyens de liaison permettent un degré de liberté en rotation axiale tout en permettant une absorption des vibrations ;
- la structure comprend une troisième portion joignant la première portion à la deuxième portion, la troisième portion ayant une épaisseur décroissante de manière continue de la première portion à la deuxième portion ; cela permet de créer une zone de transition entre la première portion et la deuxième portion ; le bras de suspension résiste ainsi mieux aux charges et à la déformation, la déformation entre la première portion et la deuxième portion restant cependant privilégiée ;
- la plaque de métal est obtenue par laminage ; cela permet une réalisation monobloc solide de la structure de base;
- la structure de base est formée par emboutissage de la plaque de métal ; on peut ainsi lui donner facilement la forme souhaitée et notamment la renforcer par la formation de nervures ;
- l'épaisseur de la plaque de métal dans la première portion est entre 1,1 fois et 1,8 fois supérieure à l'épaisseur de la plaque de métal dans la deuxième portion ;
- le bras de suspension en un bras inférieur de suspension.

Un autre objet de l'invention est un véhicule automobile, tel qu'un camion ou une voiture, comprenant au moins un bras de suspension selon l'invention.

D'autres caractéristiques et avantages de l'invention apparaîtront à la lecture de la description détaillée d'un exemple non limitatif qui suit, pour la compréhension de laquelle on se reportera aux dessins annexés, parmi lesquels :
- la figure 1 est une vue en perspective d'un bras de suspension selon l'invention, vue de dessus et légèrement sur l'arrière ;
- la figure 2 est une section de la figure selon DD' .

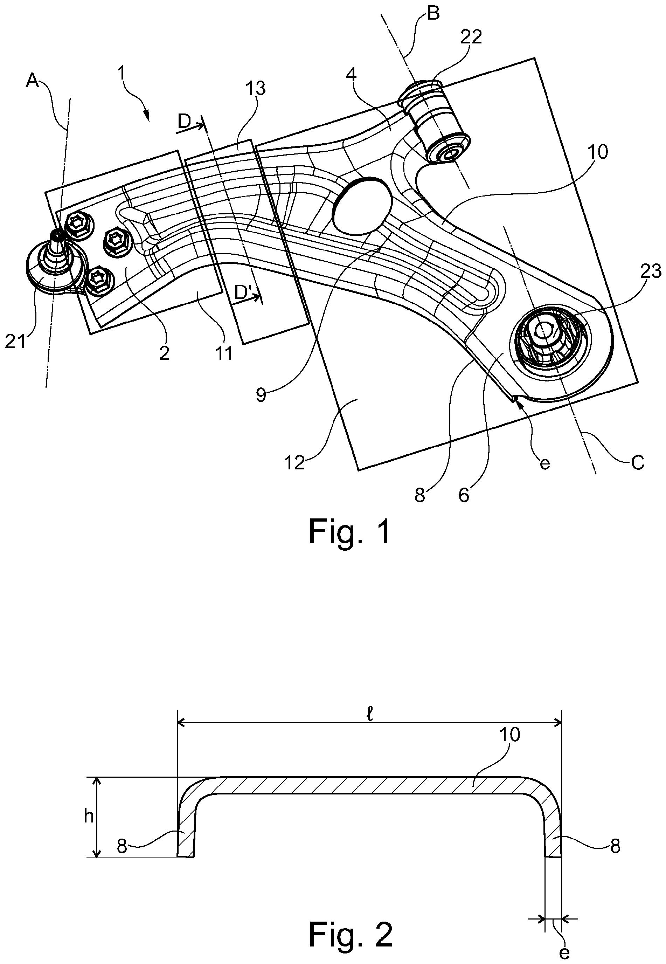

La figure 1 illustre un exemple de bras de suspension 1 selon l'invention. Cet exemple de bras de suspension 1 est encore appelé triangle de suspension. En effet, celui-ci relie la roue au châssis du véhicule par trois points de liaison. La roue, le châssis et le véhicule ne sont pas représentés. Par exemple, le moyeu de la roue est relié au bras de suspension 1 via un moyen de liaison 21, et le bras de suspension 1 est relié au châssis du véhicule via deux moyens de liaison 22 et 23.

Dans cet exemple, il s'agit d'un bras inférieur.

Ce bras de suspension 1 comprend une structure de base 10, formée à partir d'une plaque de métal, dans cet exemple une plaque de tôle en acier.

Cette plaque de tôle est une pièce monobloc obtenue dans cet exemple par laminage. La plaque de tôle est ensuite emboutie. On obtient ainsi la structure de base 10 avec sa forme finale.

Cet emboutissage confère à la structure de base 10 une rigidité suffisante pour que le bras de suspension 1 ne se déforme pas lors de l'utilisation normale du véhicule, en particulier lors des différents efforts que peut subir la roue. Notamment, la structure de base 10 présente des rebords 8 ainsi qu'une dépression centrale 9, qui correspondent respectivement à des nervures de renforcement sur les bords et à une grande nervure centrale de renforcement.

Selon l'invention, cette plaque de tôle n'a pas la même épaisseur selon l'endroit du bras de suspension 1. En effet, le bras de suspension 1 comprend deux portions d'épaisseurs différentes.

Dans cet exemple, la structure de base 10 comprend une première portion 11 destinée à être reliée à la roue du véhicule. La structure de base 10 comprend également une deuxième portion 12 destinée à être reliée au châssis du véhicule. Ces portions sont représentées par des rectangles en figure 1. L'épaisseur de la plaque de tôle dans la première portion 11 est supérieure à celle de la plaque de tôle dans la deuxième portion 12. Dans cet exemple, l'épaisseur de la plaque de tôle dans la première portion 11 est de 4,5 millimètres (mm), et l'épaisseur de la plaque de tôle dans la deuxième portion 12 est de 3 mm.

Dans le cas d'une obtention de la plaque de métal par laminage, la plaque de tôle peut directement être laminée avec des épaisseurs différentes selon les zones de la plaque de tôle. Ensuite, cette dernière pourra être découpée et/ou emboutie de manière à obtenir la première portion 11 avec une épaisseur plus élevée que celle de la deuxième portion 12, comme décrit dans la présente demande.

Selon une réalisation de l'invention, la première portion et la deuxième portion peuvent être réalisées côte à côte.

Selon une autre réalisation de l'invention, tel que dans l'exemple illustré, la première portion 11 et la deuxième portion 12 sont séparées par une troisième portion 13 qui forme une zone de transition. L'épaisseur de cette troisième portion 13 varie d'une épaisseur correspondant à celle de la portion 11, jusqu'à une épaisseur correspondant à celle de l'épaisseur de la deuxième portion 12.

Le bras de suspension 1 présente une rigidité lui permettant de supporter les charges résultant de l'utilisation normale du véhicule.

En cas de choc d'une certaine intensité, différant d'une situation de conduite normale du véhicule, le bras de suspension 1 se déformera de façon privilégiée entre la première portion 11 et la deuxième portion 12, à savoir, dans cet exemple, à l'intérieur de la troisième portion 13.

Le fait d'avoir une zone de transition, à savoir la troisième portion 13, rend ce bras de suspension 1 plus résistant, comparé à un passage discontinu de l'épaisseur de la première portion à celle de la deuxième portion. Cette zone de transition reste néanmoins la zone de déformation privilégiée.

Dans cet exemple, la structure de base 10, et donc le bras de suspension 1, comprend trois branches.

La première branche 2 comprend une extrémité agencée de manière à recevoir le moyen de liaison à la roue 21.

Dans cet exemple, il s'agit d'une liaison rotule 21 comportant un siège de rotule, recevant une sphère destinée à être reliée au moyeu de la roue du véhicule. La rotule peut bouger selon différentes inclinaisons autour d'un premier axe A.

Ce siège est vissé à une extrémité libre de la première branche 2, dans cet exemple par trois vis serrées par des boulons, non représentés.

La fixation de ce siège, notamment l'emplacement des vis, est agencé à l'intérieur de la première portion 11. Autrement dit, l'extrémité de la première branche 2 forme la première portion 11 et a donc l'épaisseur la plus élevée. De ce fait, la rotule 21 est solidement fixée à la structure de base 10 et, en cas de choc important, la déformation ne se produira pas au niveau de la première portion 11. Il n'y aura pas de déformation de la plaque de métal au niveau des vis. On évite ainsi un risque de délogement de la sphère de son siège.

La deuxième branche 4 est agencée pour accueillir le premier moyen de liaison au châssis 22. Il s'agit d'une première articulation permettant un mouvement de rotation autour d'un deuxième axe B. Dans cet exemple, cette première articulation est un silentbloc® 22, dont les cylindres concentriques présentent des axes coaxiaux avec le deuxième axe B. Par exemple, le cylindre extérieur du silentbloc® 22 est fixé à l'extrémité libre de la deuxième branche 4.

La troisième branche 6 est agencée pour accueillir le deuxième moyen de liaison au châssis 23, qui est une deuxième articulation permettant un mouvement de rotation autour d'un troisième axe C. Dans cet exemple, cette deuxième articulation est également un silentbloc® 23, dont les cylindres concentriques présentent des axes coaxiaux avec le troisième axe C. Dans cet exemple, l'extrémité libre de la troisième branche 6 comprend un orifice à l'intérieur duquel le cylindre extérieur du silentbloc® 23 est monté en force.

Le bras de suspension 1 est agencé pour être monté sur le véhicule, de manière à ce que les trois points de liaison soient globalement dans un plan horizontal, lorsque le véhicule est sur une surface horizontale. Dans ce cas, le premier axe A est globalement vertical. Le deuxième axe B est globalement horizontal et longitudinal, à savoir orienté selon l'axe longitudinal du véhicule. Le silentbloc® 22 permettra ainsi d'encaisser des vibrations verticales. Le troisième axe C est orienté de manière à permettre au silentbloc® 24 d'encaisser les vibrations présentant des composantes transversales, soit globalement perpendiculaires à l'axe longitudinal du véhicule. L'axe longitudinal du véhicule est l'axe passant environ par le milieu du véhicule selon une direction avant-arrière du véhicule.

La deuxième portion 12 englobe la deuxième branche 4 et la troisième branche 6. Ce sont donc elles qui présentent l'épaisseur minimale, à savoir de 3 mm dans cet exemple.

On a donc favorisé, dans l'exemple illustré, le renforcement au niveau de la liaison rotule 21, qui est la liaison la plus fragile. Néanmoins, la zone de déformation favorisée en cas de choc sur la roue, se situe dans la troisième portion 13. Ainsi, les liaisons au châssis sont également préservées. On évite également que l'effort soit transmis au berceau du châssis et que ce berceau se déforme.

La troisième portion 13 forme ainsi une zone qui est apte à se déformer de façon privilégiée.

Dans cet exemple, la base de la première branche 2 est située dans la deuxième portion 12. De ce fait, la troisième portion 13 est située en travers de la première branche 2. C'est donc cette première branche 2 qui est apte à plier, en cas de choc sur la roue suffisant pour déformer le bras de suspension 1, entraînant ainsi un décalage important du premier axe A. Il s'ensuit qu'après un tel choc, la roue présentera une orientation verticale suffisamment décalée, par rapport à son orientation en l'absence de déformation, pour que cela soit visible par l'utilisateur. Le bras de suspension 1 n'ayant pas rompu, l'utilisateur pourra néanmoins rouler suffisamment jusqu'à une zone de réparation ou du moins d'évacuation. Cependant, l'utilisateur ainsi informé de la déformation du bras de suspension 1 ne continuera pas à rouler trop longtemps, ce qui entraînerait un risque de rupture du bras de suspension.

Un pli franc horizontal est favorisé par le fait que, comme on peut le voir en figures 1 et 2, la hauteur h de la première branche 2, donc des rebords 8, est beaucoup plus petite que la largeur 1 de la première branche 2 et que sa longueur.

Bien entendu la forme du bras de suspension n'est pas limitée à celle qui a été décrite. On pourrait envisager d'autres formes, tout en conservant des portions d'épaisseurs différentes afin de favoriser une déformation entre celles-ci.

De plus, les ratios entre les épaisseurs de la plaque de tôle dans la première portion 11 et dans la deuxième portion 12 peuvent varier. Par exemple, sur un véhicule dont la roue présente des flancs de hauteur faible comparée au diamètre de la roue, la hauteur des flancs correspondant à la dimension du pneu allant de la jante à la bande de roulement du pneu, la première portion 11 peut avoir une épaisseur de 4,5 mm et la deuxième portion 12 une épaisseur de 4 mm. Sur un véhicule dont la roue présente des flancs de hauteur plus élevée comparée au diamètre de la roue, la première portion 11 peut avoir une épaisseur de 3 mm et la deuxième portion 12 une épaisseur de 2,5 mm.

## Revendications

1. Bras de suspension (1) de véhicule comprenant une structure de base (10) formée à partir d'une plaque de métal, ladite structure de base comprenant :
- une première portion (11) destinée à être fixée à une roue d'un véhicule,
- une deuxième portion (12) destinée à être fixée au châssis du véhicule,
**caractérisé en ce que** l'épaisseur de la plaque de métal dans ladite première portion est supérieure à l'épaisseur de la plaque de métal dans ladite deuxième portion.

2. Bras de suspension (1) selon la revendication 1, **caractérisé en ce que** ladite première portion (11) est agencée de manière à être apte à recevoir au moins un moyen de liaison à une roue (21), et **en ce que** ladite deuxième portion (12) est agencée de manière à être apte à recevoir des moyens de liaison au châssis (22, 23) distincts.

3. Bras de suspension (1) selon la revendication 2, **caractérisé en ce que** ladite première portion (11) est agencée de manière à être apte à recevoir un moyen de liaison à une roue (21), et **en ce que** ladite deuxième portion est agencée de manière à être apte à recevoir deux moyens de liaison au châssis (22, 23) distincts.

4. Bras de suspension (1) selon l'une des revendications 2 à 3, **caractérisé en ce que** la structure de base (10) comprend une première branche (2) avec :
- une extrémité apte à recevoir le au moins un moyen de liaison à une roue (21), ladite extrémité étant agencée dans ladite première portion (11) et
- une base agencée dans ladite deuxième portion (12) .

5. Bras de suspension (1) selon la revendication 4, **caractérisé en ce que** ladite deuxième portion comprend une deuxième branche (4) et une troisième branche (6), ladite deuxième branche étant apte à recevoir un premier des moyens de liaison au châssis (22), et ladite troisième branche étant apte à recevoir un deuxième des moyens de liaison au châssis (23) .

6. Bras de suspension (1) selon l'une des revendications 2 à 5, **caractérisé en ce qu'**il comprend le au moins un moyen de liaison à une roue (21) et les moyens de liaison au châssis (22, 23).

7. Bras de suspension (1) selon la revendication 6, **caractérisé en ce que** le moyen de liaison à une roue (21) est une liaison rotule.

8. Bras de suspension (1) selon l'une des revendications précédentes, **caractérisé en ce que** la structure comprend une troisième portion (13) joignant ladite première portion (11) à ladite deuxième portion (12), ladite troisième portion ayant une épaisseur décroissante de manière continue de ladite première portion à ladite deuxième portion.

9. Bras de suspension (1) selon l'une des revendications précédentes, **caractérisé en ce que** l'épaisseur de la plaque de métal dans ladite première portion (11) est entre 1,1 fois et 1,8 fois supérieure à l'épaisseur de la plaque de métal dans ladite deuxième portion (12).

10. Véhicule automobile comprenant au moins un bras de suspension (1) selon l'une des revendications précédentes.

## Patentansprüche

1. Aufhängungsarm (1) eines Fahrzeugs, welcher eine Basisstruktur (10) umfasst, die aus einer Metallplatte ausgebildet ist, wobei die Basisstruktur umfasst:
- einen ersten Abschnitt (11), der dazu bestimmt ist, an einem Rad eines Fahrzeugs befestigt zu werden,
- einen zweiten Abschnitt (12), der dazu bestimmt ist, am Fahrgestell des Fahrzeugs befestigt zu werden,
**dadurch gekennzeichnet, dass** die Dicke der Metallplatte im ersten Abschnitt größer als die Dicke der Metallplatte im zweiten Abschnitt ist.

2. Aufhängungsarm (1) nach Anspruch 1, **dadurch gekennzeichnet, dass** der erste Abschnitt (11) so gestaltet ist, dass er geeignet ist, wenigstens ein Mittel zur Verbindung mit einem Rad (21) aufzunehmen, und dadurch, dass der zweite Abschnitt (12) so gestaltet ist, dass er geeignet ist, verschiedene Mittel zur Verbindung mit dem Fahrgestell (22, 23) aufzunehmen.

3. Aufhängungsarm (1) nach Anspruch 2, **dadurch gekennzeichnet, dass** der erste Abschnitt (11) so gestaltet ist, dass er geeignet ist, ein Mittel zur Verbindung mit einem Rad (21) aufzunehmen, und dadurch, dass der zweite Abschnitt so gestaltet ist, dass er geeignet ist, zwei verschiedene Mittel zur Verbindung mit dem Fahrgestell (22, 23) aufzunehmen.

4. Aufhängungsarm (1) nach einem der Ansprüche 2 bis 3, **dadurch gekennzeichnet, dass** die Basisstruktur (10) einen ersten Schenkel (2) umfasst, mit:
- einem Ende, das geeignet ist, das wenigstens eine Mittel zur Verbindung mit einem Rad (21) aufzunehmen, wobei dieses Ende in dem ersten Abschnitt (11) angeordnet ist, und
- einem Unterteil, das im zweiten Abschnitt (12) angeordnet ist.

5. Aufhängungsarm (1) nach Anspruch 4, **dadurch gekennzeichnet, dass** der zweite Abschnitt einen zweiten Schenkel (4) und einen dritten Schenkel (6) umfasst, wobei der zweite Schenkel geeignet ist, ein erstes der Mittel zur Verbindung mit dem Fahrgestell (22) aufzunehmen, und der dritte Schenkel geeignet ist, ein zweites der Mittel zur Verbindung mit dem Fahrgestell (23) aufzunehmen.

6. Aufhängungsarm (1) nach einem der Ansprüche 2 bis 5, **dadurch gekennzeichnet, dass** er das wenigstens eine Mittel zur Verbindung mit einem Rad (21) und die Mittel zur Verbindung mit dem Fahrgestell (22, 23) umfasst.

7. Aufhängungsarm (1) nach Anspruch 6, **dadurch gekennzeichnet, dass** das Mittel zur Verbindung mit einem Rad (21) eine Kugelgelenkverbindung ist.

8. Aufhängungsarm (1) nach einem der vorhergehenden Ansprüche, **dadurch gekennzeichnet, dass** die Struktur einen dritten Abschnitt (13) umfasst, der den ersten Abschnitt (11) mit dem zweiten Abschnitt (12) verbindet, wobei der dritte Abschnitt eine Dicke aufweist, die sich vom ersten Abschnitt zum zweiten Abschnitt allmählich verringert.

9. Aufhängungsarm (1) nach einem der vorhergehenden Ansprüche, **dadurch gekennzeichnet, dass** die Dicke der Metallplatte im ersten Abschnitt (11) das 1,1-Fache bis 1,8-Fache der Dicke der Metallplatte im zweiten Abschnitt (12) beträgt.

10. Kraftfahrzeug, welches mindestens einen Aufhängungsarm (1) nach einem der vorhergehenden Ansprüche umfasst.

## Claims

1. Suspension arm (1) for a vehicle, having a base structure (10) formed from a metal plate, said base structure comprising:
- a first portion (11) designed to be attached to a wheel of a vehicle,
- a second portion (12) designed to be attached to the chassis of the vehicle,
**characterized in that** the thickness of the metal plate in said first portion is greater than the thickness of the metal plate in said second portion.

2. Suspension arm (1) according to Claim 1, **characterized in that** said first portion (11) is arranged so as to be able to receive at least one means for connecting to a wheel (21), and **in that** said second portion (12) is arranged so as to be able to receive distinct means for connecting to the chassis (22, 23).

3. Suspension arm (1) according to Claim 2, **characterized in that** said first portion (11) is arranged so as to be able to receive a means for connecting to a wheel (21), and **in that** said second portion is arranged so as to be able to receive two distinct means for connecting to the chassis (22, 23) .

4. Suspension arm (1) according to either of Claims 2 and 3, **characterized in that** the base structure (10) comprises a first branch (2) with:
- one end that is able to receive the at least one means for connecting to a wheel (21), said end being arranged in said first portion (11), and
- a base arranged in said second portion (12).

5. Suspension arm (1) according to Claim 4, **characterized in that** said second portion comprises a second branch (4) and a third branch (6), said second branch being able to receive a first of the means for connecting to the chassis (22), and said third branch being able to receive a second of the means for connecting to the chassis (23).

6. Suspension arm (1) according to one of Claims 2 to 5, **characterized in that** it comprises the at least one means for connecting to a wheel (21) and the means for connecting to the chassis (22, 23).

7. Suspension arm (1) according to Claim 6, **characterized in that** the means for connecting to a wheel (21) is a ball joint.

8. Suspension arm (1) according to one of the preceding claims, **characterized in that** the structure comprises a third portion (13) joining said first portion (11) to said second portion (12), said third portion having a thickness that decreases continuously from said first portion to said second portion.

9. Suspension arm (1) according to one of the preceding claims, **characterized in that** the thickness of the metal plate in said first portion (11) is between 1.1 times and 1.8 times greater than the thickness of the metal plate in said second portion (12).

10. Motor vehicle comprising at least one suspension arm (1) according to one of the preceding claims.
